Europäisches Patentamt

European Patent Office

Office européen des brevets

(11) Veröffentlichungsnummer: **0 479 061 A1**

## EUROPÄISCHE PATENTANMELDUNG

(21) Anmeldenummer: **91115986.1**

(22) Anmeldetag: **20.09.91**

(51) Int. Cl.5: **F16F 1/14**, B60G 11/18

(30) Priorität: **05.10.90 DE 4031513**

(43) Veröffentlichungstag der Anmeldung:
**08.04.92 Patentblatt 92/15**

(84) Benannte Vertragsstaaten:
**AT CH DE FR GB LI**

(71) Anmelder: **ELASTOGRAN KUNSTOFF-TECHNIK GMBH**
**Postfach 11 49**
**W-2844 Lemförde(DE)**

(72) Erfinder: **Puck, Alfred, Prof. Dr.-Ing.**
**Am Ahlberg 33**
**W-3524 Immenhausen-Mariendorf(DE)**

(74) Vertreter: **Walther, Horst, Dipl.-Ing.**
**Wilhelmshöher Allee 275 Postfach 41 01 08**
**W-3500 Kassel(DE)**

(54) **Torsionsfeder.**

(57) Die Torsionsfeder, insbesondere zur Verwendung im Automobilbau, beispielsweise als Tragfeder an einer Pkw-Hinterachse, weist einen Stahldrehstab (1, 7) auf, der mit einem GFK-Drehrohr (2, 8) verbunden ist.

Fig. 2

Die Erfindung betrifft eine Torsionsfeder, insbesondere zur Verwendung im Automobilbau, beispielsweise als Tragfeder an einer Pkw-Hinterachse.

Bekannt ist der Einbau von Torsionsfedern ganz allgemein im Maschinenbau, und hier insbesondere durch den Einsatz als Drehstabfedern im Automobilbau. Nach dem Stand der Technik kann ein derartiger Torsionsstab aus einem Stahldrehstab bestehen, der umhüllt ist von einem Stahldrehrohr, wobei der Stab und das Rohr endseitig, und zwar an dem der Krafteinleitung gegenüberliegenden Ende, miteinander verbunden sind.

Eine derartige Verbindung von zwei Bauteilen entspricht der einer Reihen- oder auch Hintereinanderschaltung. Der Kraftfluß ist bei einer solchen Torsionsfeder derart ausgebildet, daß nach Einleitung des Drehmomentes in den Stahldrehstab dieser über das mit dem Rohr verbundene Ende in das Rohr geleitet wird, und vom Rohr an die Karosserie abgegeben wird.

Die Qualität einer als Stab oder Rohr ausgebildeten Torsionsfeder zeichnet sich dadurch aus, daß die Drillung

$$\vartheta \;=\; \frac{\varphi}{l} \;=\; \frac{\gamma}{r}$$

möglichst groß gehalten wird.

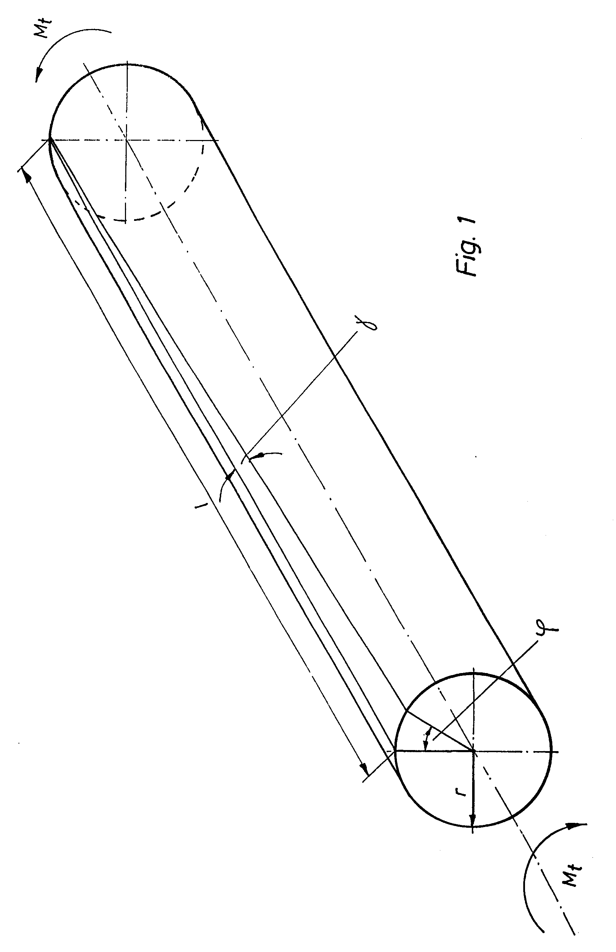

D.h. das Verhältnis von 4 zu 1 soll möglichst groß werden, damit die Länge einer derartigen Torsionsfeder klein gehalten werden kann. Hierbei ist mit 4 der Drehwinkel, der beim Torsionsmoment Mt auftritt, mit $\gamma$ der Schubwinkel am Radius r und mit l die Länge des Stabes bezeichnet. (Fig.1)

Bei der folgenden Erläuterung wird die Drillung $\vartheta$ bei einem Stahldrehstab mit 100% angesetzt. Das darübergeschobene Drehrohr muß etwa einen 1,3-fach höheren Innendurchmesser aufweisen als der Stab, da der Krafteinleitungskopf des Stabes im Durchmesser um mindestens 30% größer ist als der Durchmesser des Stabes selbst, und der Stab zur Verbindung durch das Rohr geschoben werden muß. Aufgrund der bekannten Tatsache, daß zum einen in ein dünnwandiges Drehrohr keine Eigenspannungen eingebracht werden können, -der Fachausdruck hierfür lautet "Vorsetzen"- und daß zum anderen das Rohr innen nicht derart mechanisch fein bearbeitet werden kann, wie es bei der Außenmantelfläche des Stahldrehstabes der Fall ist, darf die Schubspannung $\tau$ und entsprechend der Schubwinkel $\gamma$ am Innenradius nur etwa 50% von dem des Stahldrehstabes betragen. Aus der Beziehung

$$\vartheta \;=\; \frac{\gamma}{r} \;=\; \frac{4}{1}$$

ergibt sich, wenn man den Winkel $\gamma$ unter dem Vorhergesagten mit 50% und den Innenradius des Rohres mit dem 1,3-fachen bewertet, daß die Drillung des Rohres etwa nur noch 38% von der eines Stahldrehstabes beträgt

$$\left( \vartheta = \frac{\gamma}{r} = \frac{50\,\%}{1,3} = 38\,\% \right).$$

Hinzu kommt noch, daß das Rohr kürzer sein muß als der Stab, da das Stabende einen gewissen Überstand zur Einleitung des Drehmomentes aufweisen muß.

Berücksichtigt man bei der Berechnung auch noch das gegenüber dem Drehstab kürzere Drehrohr, so ergibt sich der Verdrehwinkel $\phi$ aus der Beziehung

$$\varphi = \vartheta \times l$$

zu etwa 30%. Das bedeutet, daß das Stahldrehrohr nur noch 30% des Drehwinkels aufbringt, den der Stab allein aufbringen kann, wenn man den Drehwinkel des Stabes zu 100% ansetzt.

Es ist unmittelbar einsichtig und bedarf keiner näheren Erläuterung, daß das Ergebnis den Bauaufwand als wenig lohnend erscheinen läßt. Zur Behebung dieses Nachteiles wird erfindungsgemäß vorgeschlagen, den stahldrehstab mit einem GFK-Drehrohr zu verbinden, und zwar vorzugsweise derart, daß der Stahldrehstab konzentrisch zum GFK-Drehrohr angeordnet ist, wobei das GFK-Drehrohr und der stahldrehstab an ihrem einen Ende, und zwar an dem der Krafteinleitung gegenüberliegenden Ende, miteinander verbunden sind.

Hierdurch wird erreicht, daß der Drehwinkel $\phi$ des GFK-Drehrohres nunmehr etwa 80% des Drehwinkels des Stahlstabes beträgt. Dies läßt sich folgendermaßen erklären:

Bei jeweils geforderten 100% Drillung von Stahlrohr und GFK-Drehrohr ergibt sich aus den unterschiedlichen Schubmoduln für Stahl und für GFK ($\sigma_{St}$ = 78 500 N/mm²; $\sigma_{GFK}$ = 11 000 N/mm²), daß der Außendurchmesser eines GFK-Rohres etwa das 1,8-fache des Außendurchmessers eines Stahlrohres betragen muß.

In Kenntnis der Tatsache, daß aus technologischen Gründen das Verhältnis zwischen Innendurchmesser und Außendurchmesser eines GFK-Rohres nicht kleiner als etwa 0,75 sein kann, ergibt sich ein relativer Innendurchmesser für das GFK-Drehrohr von 0,75 x 1,8 = 1,35. D.h. bei der Verwendung eines GFK-Drehrohres mit einem relativen Innendurchmesser, der das 1,35-fache des Außendurchmessers des Stahlstabes beträgt, ergibt sich auch für das GFK-Drehrohr eine Drillung von 100%. Festzuhalten ist hierbei, daß dieser Wert korrespondiert zu dem Wert des maximalen Außendurchmessers eines Stahldrehstabes mit Krafteinleitungskopf. Durch den Krafteinleitungskopf ergab sich ebenfalls ein um etwa 30 % größerer Durchmesser. Wie bereits eingangs erwähnt, muß das Drehrohr jedoch kürzer sein als der Stab. Hieraus ergibt sich, daß der Drehwinkel nicht 100% sein kann, sondern daß er unter Berücksichtigung des etwas kürzeren Drehrohres nur bei etwa 80% liegt.

Noch bessere Verhältnisse ergeben sich hei der Parallelschaltung eines Stahldrehstabes mit einem GFK-Drehrohr. Eine Parallelschaltung liegt dann vor, wenn der Stahlstab und das GFK-Drehrohr zu beiden Enden miteinander verbunden sind.

Aus dem Stand der Technik ist lediglich eine Parallelschaltung von Stahlstäben bekannt. Diese ist derart ausgebildet, daß zwei oder mehrere Stäbe mit parallel zueinander angeordneten Längsachsen einen Verbund bilden. Bei einem derartigen Verbund von mehreren Stahldrehstäben ergeben sich bei Torsionsbelastung zusätzliche Biegespannungen. Diese sind äußerst unerwünscht, denn sie führen zu einer erheblichen Herabsetzung der ertragbaren Schubspannung aus der Drehmomentenbelastung.

Derartige Biegespannungen treten bei der zuvor geschilderten Parallelverbindung von Stahldrehstab mit GFK-Drehrohr naturgemäß nicht auf, da diese konzentrisch zueinander ineinander gelagert sind. Nach dem Stand der Technik ist eine Parallelschaltung von ineinandergelagertem Stahldrehrohr und Stahldrehstab nicht möglich.

Die Begründung hierfür ist darin zu finden, daß, wenn man bei dem Stahldrehstab schon die höchstmögliche zulässige Schubspannung gewählt hat, das entsprechende Stahldrehrohr keinen höheren Durchmesser aufweisen kann, da das Rohr dann in jedem Fall zu hohe Schubspannungen erfährt. Diesem Nachteil kann durch die erfindungsgemäße Verbindung eines Stahldrehstabes mit einem GFK-Drehrohr abgeholfen werden, wobei beide Bauteile an beiden Enden miteinander verbunden sind. Auf diese Weise kann bei gleichem Drehwinkel etwa das doppelte Drehmoment wie bei einem Einzelstab übertragen werden.

Das Drehrohr der erfindungsgemäßen Torsionsfeder besteht aus in Richtung der Hauptnormalzugkraft und der Hauptnormaldruckkraft ausgerichteten Faserschichten, wobei die einzelnen Faserschichten durch Wickellagen gebildet werden.

Bei Beanspruchung eines Rohres durch ein Torsionsmoment werden in Richtung unter + 45 Grad und unter -45 Grad Hauptnormalkräfte hervorgerufen.

Die Hauptnormalkräfte wirken hierbei in einer Richtung als Druck- und in der anderen Richtung als Zugkraft. Bislang wurde angenommen, daß die Zeitfestigkeit eines Drehrohres der eingangs genannten Art dann besonders hoch ist, wenn die Wickellagen der einen Schicht genau unter 45 Grad verlaufen und die Wickellagen der anderen Schicht genau unter -45 Grad verlaufen. Bei einem derart aufgebauten Drehrohr wurde eine Zeitfestigkeit (Lebensdauer) von 8 x 10⁵ Lastspielen bei einer Schubspannung von 250 N/mm² erreicht.

Die Aufgabe der Erfindung besteht darin, die Zeitfestigkeit eines GFK-Drehrohres der eingangs genannten Art wesentlich zu erhöhen. Die Erhöhung der Zeitfestigkeit wird erfindungsgemäß dadurch erreicht, daß sich die in der jeweiligen Richtung ausgerichteten benachbarten Wickellagen unter einem Winkel kreuzen (Kreuzungswinkel). In Versuchen wurde herausgefinden, daß der Kreuzungswinkel mehr als 1 Grad, aber weniger als 30 Grad betragen muß. Als vorteilhaft wurde ein Winkel zwischen 5 und 30 Grad ermittelt, wobei sich als ganz besonders vorteilhaft ein Winkel zwischen 10 und 20 Grad herausgestellt hat. Durch ein derart aufgebautes Drehrohr konnte eine Verdreifachung der bisher bekannten Lebensdauer erreicht werden.

Nach einem besonderen Merkmal der Erfindung besteht das Drehrohr aus zwei Faserschichten, wobei die innenliegende Faserschicht, deren Wickellagen ungefähr in Richtung der Hauptnormaldruckkraft ausgerichtet sind, dünner ausgebildet ist als die äußere Faserschicht, deren Wickellagen ungefähr in Richtung der Hauptnormalzugkraft ausgerichtet sind.

Dieser Aufbau ergibt sich in Kenntnis der Tatsache, daß die Zeitfestigkeit eines unidirektional aufgebauten faserverstärkten Faserkunststoffverbundes parallel zur Faserrichtung bei Zugbeanspruchung wesentlich niedriger ist als bei Druckbeanspruchung. Deshalb ist es vorteilhaft, die bei einem Drehrohr auftretende Parallelzugspannung herabzusetzen und die Paralleldruckspannung zu erhöhen. Dies führt, wie oben beschrieben, dazu, daß das GFK-Drehrohr erheblich mehr Fasern in Richtung der Hauptnormalzugkraft als in Richtung der Hauptnormaldruckkraft aufweisen muß.

Dies wird vorteilhaft durch den oben beschriebenen schichtartigen Aufbau des Drehrohres erreicht.

Nach einem weiteren besonderen Merkmal der Erfindung ist bei einem Drehrohr, das aus zwei entgegengesetzt ausgerichteten Schichten aufgebaut ist, zwischen den beiden Schichten eine Rißstopperschicht, die vorzugsweise eine Glasfaserschicht ist, deren Fasern ungefähr in Axial- und Umfangsrichtung orientiert sind, eingefügt.

Nach dem Stand der Technik erfolgt die Krafteinleitung in ein GFK-Drehrohr derart, daß das metallische Anschlußstück, mittels dessen das Torsionsmoment in das Drehrohr eingebracht wurde, durch Spannkeile aufgepreßt ist. Bei dieser Art der Krafteinleitung wird der Zylinderinnenraum des Drehrohres durch die Spannkeile ausgefüllt, so daß grundsätzlich eine Verbindung eines GFK-Drehrohres mit einem Stahldrehstab nicht möglich war.

Eine derartige Verbindung wird erfindungsgemäß aber dadurch möglich, daß der inneren Faserschicht eine mit einem Steigungswinkel von etwa 1 Grad versehene Umfangswicklung als Innenmantelfläche vorgelagert ist, wobei die Umfangswicklung im Bereich der Krafteinleitung eine Aufdickung aufweist.

Durch die Anordnung einer derartigen Umfangswicklung im Bereich der Krafteinleitung wird erreicht, daß das Drehrohr in diesem Bereich hohe radial nach außen weisende Kräfte aufnehmen kann, die auftreten, wenn das das GFK-Drehrohr und das den Stahldrehstab verbindende Teil auf das GFK-Rohr aufgepreßt wird.

Nach einer bevorzugten Ausführungsform ist im Bereich der Aufdickung die Anordnung einer Stahlbuchse als Innenmantelfläche vorgesehen; die Stahlbuchse ist hierbei in die Umfangswicklung eingearbeitet. Durch diese Art der Krafteinleitung, und hier insbesondere durch die zweite Variante, wird die Lebensdauer einer Verbindung zwischen einem Stahldrehstab und einem GFK-Drehrohr entscheidend erhöht.

Darüber hinaus ist nicht zu verkennen, daß eine sich über die gesamte Innenmantelfläche erstreckende Umfangswicklung die Gefahr der Öffnung sich bildender Risse vermindert.

Die folgende Tabelle zeigt den Schichtaufbau eines mit einem Stahldrehstab kombinierbaren GFK-Drehrohres, mit einem Innendurchmesser von 30 mm und einem Außendurchmesser von 40 mm.

Die einzelnen Wickellagen werden hierbei beim Wickeln mit einem sog. Ringfadenauge mit jeweils 36 Glasseidensträngen (1200 tex) und einem Faservolumenanteil von 60 % aufgebracht.

4

| Innendurchmesser 30 mm | Dicke in mm | Winkel gegen Axialrichtung | Winkel- differenz |
|---|---|---|---|
| | 0,30 | Umfangswicklung | |
| Lage Nr. 1 | 0,37 | 37,5 Grad | |
| Lage Nr. 2 | 0,44 | 50,0 Grad | jeweils |
| Lage Nr. 3 | 0,35 | 37,5 Grad | 12,5 Grad |
| Lage Nr. 4 | 0,42 | 50,0 Grad | |
| | 0,4 | "Rißstopperschicht" | |
| Lage Nr. 5 | 0,33 | -37,5 Grad | |
| Lage Nr. 6 | 0,42 | -52,5 Grad | |
| Lage Nr. 7 | 0,31 | -37,5 Grad | jeweils |
| Lage Nr. 8 | 0,40 | -52,5 Grad | 15 Grad |
| Lage Nr. 9 | 0,30 | -37,5 Grad | |
| Lage Nr.10 | 0,39 | -52,5 Grad | |
| Lage Nr.11 | 0,29 | -37,5 Grad | |
| | 0,28 | "Reinharzschicht" (als Ober- | |
| | $\leq$ 5 mm | flächenschutz) | |

Aus der Tabelle ist erkennbar, daß die Winkel der einzelnen Wickellagen um den Winkel von + 45 bzw. -45 Grad pendeln. Man sieht, wenn eine Lage einen größeren bzw. kleineren Winkel als 45 Grad aufweist, die benachbarte Lage einen entsprechend kleineren bzw. entsprechend größeren Winkel erhält. Der Kreuzungswinkel beträgt demzufolge zwischen den ersten vier Lagen jeweils 12,5 Grad und zwischen den Lagen 5 bis 11 jeweils 15 Grad.

An Hand der Fig. 1 bis 5 ist die Erfindung beispielhaft näher erläutert.

Fig. 1 zeigt einen Drehstab;

Fig. 2 zeigt eine Reihenschaltung eines GFK-Drehrohres mit einem Stahldrehstab;

Fig. 3 zeigt eine Parallelschaltung eines GFK-Drehrohres mit einem Stahldrehstab;

Fig. 4 zeigt die Krafteinleitung eines GFK-Drehrohres mit in der Umfangswicklung eingearbeiteter Stahlbuchse;

Fig. 5 zeigt beispielhaft die Anordnung der Wickellagen 5 und 6.

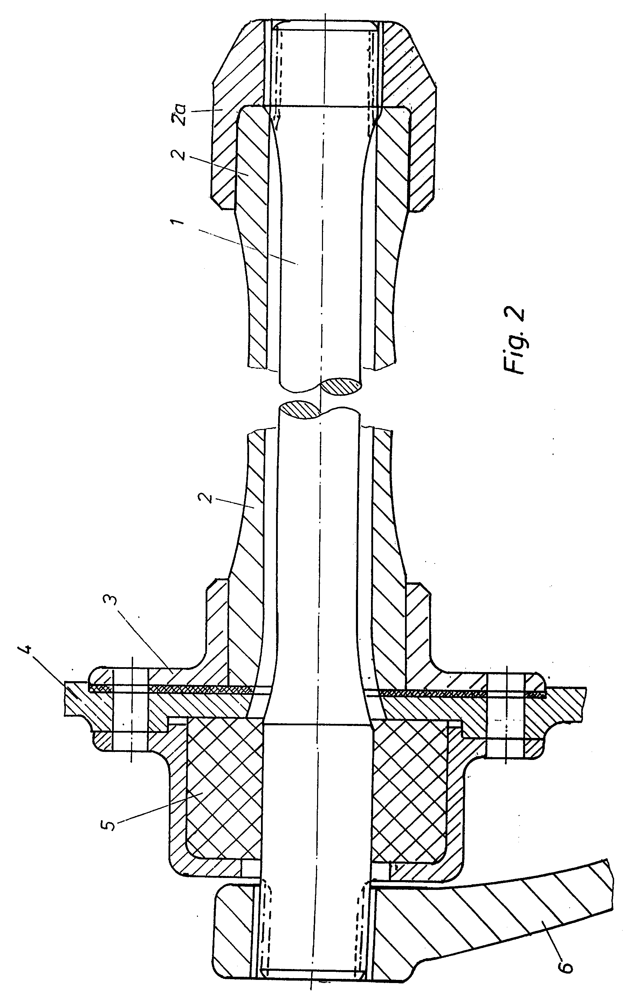

Fig. 1 dient der Erläuterung der einzelnen Größen; bei der in Fig. 2 dargestellten Reihenschaltung ist der Stahldrehstab mit 1 und das GFK-Drehrohr mit 2 bezeichnet. Das Drehrohr 2 ist durch den Flansch 3 mit einem Fixpunkt, beispielsweise mit einer Karosserie 4 eines Fahrzeugs, verbunden. Mittels des Lagers 5 im Bereich der Krafteinleitung ist der Stahldrehstab 1 gegenüber dem Drehrohr 2 beweglich gelagert. Wird der Stahldrehstab 1 beispielsweise durch den mit 6 bezeichneten Längslenker mit einem Torsionsmoment Mt beaufschlagt, wird die hierbei entstehende Kraft über den Stahldrehstab 1 und über das endseitig damit, z.B. durch eine Muffe 2a verbundene Drehrohr 2, auf die Karosserie 4 übertragen.

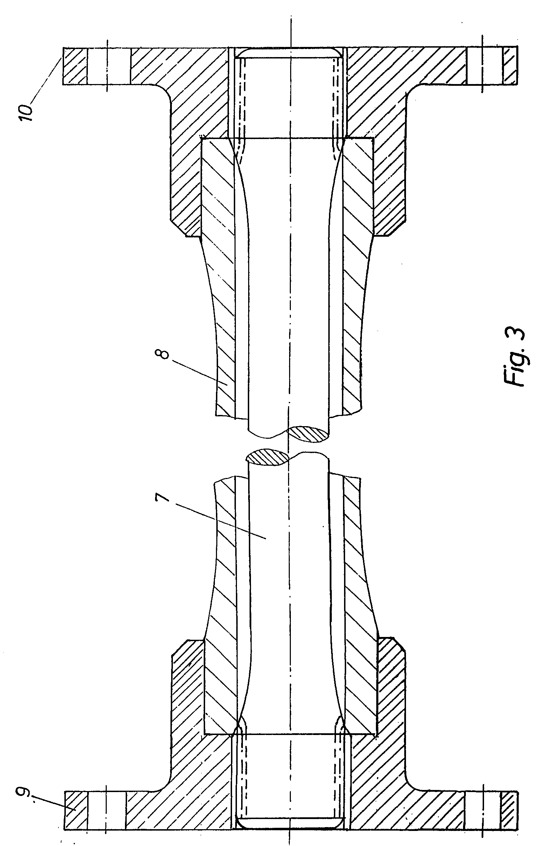

In Fig. 3 ist die als Torsionsfeder ausgebildete parallele Verbindung eines Stahldrehstabes 7 mit einem Drehrohr 8 aus GFK an beiden Enden gleich ausgebildet. Das Torsionsmoment wird hierbei beispielsweise durch den Flansch 9 eingeleitet und durch den Flansch 10 an die Karosserie abgeleitet.

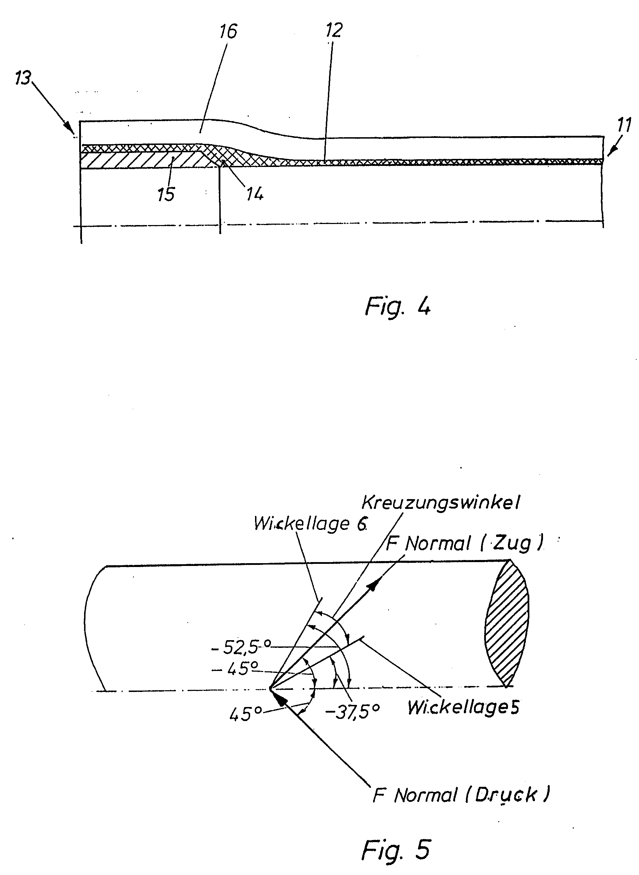

Fig. 4 zeigt den Aufbau eines GFK-Drehrohres mit einer im Bereich der Krafteinleitung in die Umfangswicklung eingearbeiteten Metallbuchse 15. Hierbei ist das GFK-Drehrohr insgesamt mit 11 bezeichnet. Als Innenmantelfläche weist das Rohr die Umfangswicklung 12 auf, die die Grundlage für die einzelnen Faserschichten bildet. Im Bereich der Krafteinleitung (Pfeil 13) weist die Umfangswicklung eine Aufdickung 14 auf, in die die Stahlbuchse 15 eingearbeitet ist. Mit 16 ist die aus den zwei Wickellagen bestehende Schicht bezeichnet.

Eine ausreichend feste Verbindung zwischen Stahlbuchse und Umfangswicklung ergibt sich dadurch, daß der Werkstoff GFK die Eigenschaft hat, sich beim Abkühlen nach der Härtung zusammenzuziehen.

**Patentansprüche**

1. Torsionsfeder, insbesondere zur Verwendung im Automobilbau, beispielsweise als Tragfeder an einer Pkw-Hinterachse,
   **gekennzeichnet** durch
   einen Stahldrehstab, (1, 7), der mit einem GFK-Drehrohr (2, 8) verbunden ist.

2. Torsionsfeder nach Anspruch 1
   **dadurch gekennzeichnet, daß**
   der Stahldrehstab (1, 7) konzentrisch zum GFK-Drehrohr (2, 8) angeordnet ist.

3. Torsionsfeder nach Anspruch 2
   **dadurch gekennzeichnet, daß**
   das GFK-Drehrohr (2) und der Stahldrehstab (1) an ihrem einen Ende miteinander verbunden sind.

4. Torsionsfeder nach Anspruch 3
   **dadurch gekennzeichnet, daß**
   das GFK-Drehrohr (2) und der Stahldrehstab (1) an dem der Krafteinleitung gegenüberliegenden Ende miteinander verbunden sind.

5. Torsionsfeder nach Anspruch 2
   **dadurch gekennzeichnet, daß**
   das GFK-Drehrohr (8) und der Stahldrehstab (7) an beiden Enden miteinander verbunden sind.

6. Torsionsfeder, insbesondere nach einem oder mehreren der voranstehenden Ansprüche, bei der das GFK-Drehrohr aus in Richtung der Hauptnormalzugkraft und in Richtung der Hauptnormaldruckkraft ausgerichteten Faserschichten besteht, die durch Wickellagen gebildet werden,
   **dadurch gekennzeichnet, daß**
   sich die in der jeweiligen Richtung ausgerichteten benachbarten Wickellagen unter einem bestimmten Winkel kreuzen (Kreuzungswinkel).

7. Torsionsfeder nach Anspruch 6
   **dadurch gekennzeichnet, daß**
   der Kreuzungswinkel mehr als 1 Grad, aber weniger als 30 Grad beträgt.

8. Torsionsfeder nach Anspruch 6
   **dadurch gekennzeichnet, daß**
   der Kreuzungswinkel zwischen 5 und 30 Grad liegt.

9. Torsionsfeder nach Anspruch 6
   **dadurch gekennzeichnet, daß**
   der Kreuzungswinkel zwischen 10 und 20 Grad liegt.

10. Torsionsfeder nach Anspruch 6
    **dadurch gekennzeichnet, daß**
    zwischen zwei entgegengesetzt ausgerichteten Schichten eine Rißstopperschicht angeordnet ist.

11. Torsionsfeder nach Anspruch 10
    **dadurch gekennzeichnet, daß**
    die Rißstopperschicht eine Glasfaserschicht ist, dessen Fasern ungefähr in Axial- und Umfangsrichtung orientiert sind.

12. Torsionsfeder nach Anspruch 6

**dadurch gekennzeichnet,** daß

das Drehrohr (2, 8) aus zwei Faserschichten besteht, wobei die innenliegende Faserschicht, deren Wickellagen ungefähr in Richtung der Hauptnormaldruckkraft ausgerichtet sind, dünner ausgebildet ist als die äußere Faserschicht, deren Wickellagen ungefähr in Richtung der Hauptnormalzugkraft angeordnet sind.

13. Torsionsfeder nach Anspruch 6

bei der das GFK-Drehrohr aus in Richtung der Hauptnormalzugkraft und in Richtung der Hauptnormaldruckkraft ausgerichteten Faserschichten besteht, die durch Wickellagen gebildet werden,

**dadurch gekennzeichnet,** daß

der inneren Faserschicht eine mit einem Steigungswinkel von etwa 1 Grad versehene Umfangswicklung als Innenmantelfläche vorgelagert ist, wobei die Umfangswicklung (12) im Bereich der Krafteinleitung (Pfeil 13) eine Aufdickung (14) aufweist.

14. Torsionsfeder nach Anspruch 13

**dadurch gekennzeichnet,** daß

im Bereich der Aufdickung (14) die Anordnung einer Metallbuchse (15) als Innenmantelfläche vorgesehen ist.

15. Torsionsfeder nach Anspruch 13

**dadurch gekennzeichnet,** daß

die Fasern, die ungefähr in Richtung der Hauptnormalzugkraft angeordnet sind, Glasfäden mit erhöhter Zugschwellfestigkeit sind.

Fig. 1

Fig. 2

EP 0 479 061 A1

Fig. 3

Fig. 4

Fig. 5

Europäisches
Patentamt

**EUROPÄISCHER RECHERCHENBERICHT**

Nummer der Anmeldung

## EINSCHLÄGIGE DOKUMENTE

EP 91115986.1

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| A | <u>GB - A - 2 165 333</u><br>(ODOBASIC)<br>   * Fig. 1-3; Seite 2,<br>      Zeilen 96-127 *<br>                 -- | 1 | F 16 F   1/14<br>B 60 G 11/18 |
| A | <u>GB - A - 2 165 026</u><br>(AVILE)<br>   * Fig. 1-4; Zusammenfassung *<br>                 -- | 1 | |
| A | <u>DE - A - 3 819 162</u><br>(IBP PIETZSCH GMBH)<br>   * Fig. 1,2 *<br>                 -- | | |
| A | <u>US - A - 4 473 238</u><br>(ANTOINE)<br>   * Fig. 2; Zusammenfassung *<br>                 -- | | |
| A | <u>GB - A - 1 583 317</u><br>(RUBERY OWEN LIMITED)<br>   * Fig. 1,2 *<br>                 ---- | 1 | |

|  |
|---|
| RECHERCHIERTE SACHGEBIETE (Int Cl⁵) |
| F 16 F   1/00<br>B 60 G 11/00 |

Der vorliegende Recherchenbericht wurde für alle Patentansprüche erstellt.

| Recherchenort | Abschlußdatum der Recherche | Prüfer |
|---|---|---|
| WIEN | 27-11-1991 | PIRKER |